# EUROPEAN PATENT APPLICATION

(11) **EP 4 564 290 A1**
(43) Date of publication of application: **04.06.2025**
(21) Application number: 24196935.1
(22) Date of filing: 28.08.2024
(51) Int. Cl.: G06T 7/20, G06T 7/70

(54) **METHOD OF ESTIMATING UNCERTAINTY IN A VISION-BASED TRACKING SYSTEM AND ASSOCIATED APPARATUS AND SYSTEM**

(30) Priority: 28.11.2023 US 202318521939
(71) Applicant: The Boeing Company, Arlington, VA 22202 (US)
(72) Inventor: HUNG, Fan Hin, Arlington, 22202 (US); KHOSLA, Deepak, Arlington, 22202 (US); RATZLAFF, Neale, Arlington, 22202 (US); LATIB, Tameez, Arlington, 22202 (US); SMITH, Haden, Arlington, 22202 (US); NGUYEN, Leon, Arlington, 22202 (US)
(74) Representative: Boult Wade Tennant LLP

(57) **Abstract**

Methods, apparatuses and systems of estimating uncertainty in a vision-based tracking system are disclosed. The method includes receiving a two-dimensional (2D) image of at least a portion of a first object via a camera on a second object. A set of keypoints are predicted on the first object in the 2D image by each one of a plurality of keypoint detectors (i.e., neural networks), organized into an ensemble. A three-dimensional (3D) pose is predicted for each one of the plurality of keypoint detectors from the corresponding set of keypoints. Additionally, the method includes deriving a measure of variation between each one of the 3D poses of the plurality of keypoint detectors and computing a Euclidean norm of the measure of variation to produce an uncertainty value. A process between the first object and the second object can be controlled in response to the calculated uncertainty value.

## Description

### FIELD

This disclosure relates generally to vision-based tracking system, and more particularly to estimating uncertainty in a vision-based tracking system.

### BACKGROUND

A pose estimation is often used in a vision-based tracking system to accurately locate and track an object's position and orientation within a physical environment. This process generally relies on keypoints that are predicted within two-dimensional (2D) images or video frames. However, inaccurate predictions of keypoint can lead to imprecise pose estimations, undermining the system's overall performance. To mitigate the risk of inaccurate pose estimations, a conventional method employs the use of a three-dimensional (3D) model of the object, allowing for a comparison with predicted keypoints in the 2D images. However, this method fails to account for occlusions and environmental variables, limiting its effectiveness in real-world scenarios.

### SUMMARY

The subject matter of the present application has been developed in response to the present state of the art, and in particular, in response to the problems of and needs created by, or not yet fully solved by, typical uncertainty estimations. Generally, the subject matter of the present application has been developed to provide a method of estimating uncertainty in a vision-based tracking system that overcomes at least some of the above-discussed shortcomings of prior art techniques.

Disclosed herein in a method of estimating uncertainty in a vision-based tracking system. The method includes receiving a two-dimensional (2D) image of at least a portion of a first object via a camera on a second object. The method also includes predicting a set of keypoints on the first object in the 2D image by each one of a plurality of keypoint detectors. The method further includes computing a three-dimensional (3D) pose for each one of the plurality of keypoint detectors from the corresponding set of keypoints. The method additionally includes deriving a measure of variation between each one of the 3D poses of the plurality of keypoint detectors and computing a Euclidean norm of the measure of variation to produce an uncertainty value. The method also includes controlling a process between the first object and the second object in response to the uncertainty value. The preceding subject matter of this paragraph characterizes example 1 of the present disclosure.

Computing the 3D pose is based on a 2D-to-3D correspondence model. The preceding subject matter of this paragraph characterizes example 2 of the present disclosure, wherein example 2 also includes the subject matter according to example 1, above.

Each 3D pose includes a vector of six values. Each one of the six values represents a corresponding one of six degrees of freedom of the 3D pose. Deriving the measure of variation between each one of the 3D poses comprises deriving the measure of variation in each vector for each one of the six degrees of freedom. The preceding subject matter of this paragraph characterizes example 3 of the present disclosure, wherein example 3 also includes the subject matter according to any of examples 1-2, above.

The plurality of keypoint detectors includes at least three keypoint detectors. The preceding subject matter of this paragraph characterizes example 4 of the present disclosure, wherein example 4 also includes the subject matter according to any of examples 1-3, above.

The method includes individually training each one of the plurality of keypoint detectors, prior to predicting the corresponding set of keypoints. Each one of the plurality of keypoint detectors has identical architecture, training duration, and training data. Each one of the plurality of keypoint detectors is initialized with random valued weights. The preceding subject matter of this paragraph characterizes example 5 of the present disclosure, wherein example 5 also includes the subject matter according to any of examples 1-4, above.

The measure of variation between each one of the 3D poses of the plurality of keypoint detectors is the standard deviation between each one of the 3D poses. The preceding subject matter of this paragraph characterizes example 6 of the present disclosure, wherein example 6 also includes the subject matter according to example 5, above.

The process between the first object and the second object includes a coupling process between the first object and the second object. Controlling the coupling process includes, when the uncertainty value is at or below a predefined threshold, engaging a coupling between the first object and the second object, and, when the uncertainty value is above the predefined threshold, preventing the coupling between the first object and the second object. The preceding subject matter of this paragraph characterizes example 7 of the present disclosure, wherein example 7 also includes the subject matter according to any of examples 1-6, above.

The process between the first object and the second object is automatically controlled. The preceding subject matter of this paragraph characterizes example 8 of the present disclosure, wherein example 8 also includes the subject matter according to any of examples 1-7, above.

The process between the first object and the second object is manually controlled, such that the process is initiated by an operator. The preceding subject matter of this paragraph characterizes example 9 of the present disclosure, wherein example 9 also includes the subject matter according to any of examples 1-8, above.

The 2D image includes a portion of the second object. Predicting the set of keypoints includes predicting additional keypoints on the second object in the 2D image by each one of the plurality of keypoint detectors. The preceding subject matter of this paragraph characterizes example 10 of the present disclosure, wherein example 10 also includes the subject matter according to any of examples 1-9, above.

The first object is a receiver aircraft. The second object is a tanker aircraft. The process is a refueling operation between the receiver aircraft and the tanker aircraft. The preceding subject matter of this paragraph characterizes example 11 of the present disclosure, wherein example 11 also includes the subject matter according to any of examples 1-10, above.

Also disclosed herein is a vision-based tracking apparatus including a processor and non-transitory computer readable storage media storing code. The code is executable by the processor to perform operations including receiving a two-dimensional (2D) image of at least a portion of a first object via a camera on a second object. The code is also executable by the processor to perform operations including predicting a set of keypoints on the first object in the 2D image by each one of a plurality of keypoint detectors. The code is further executable by the processor to perform operations including computing a three-dimensional (3D) pose for each one of the plurality of keypoint detectors from the corresponding set of keypoints. The code is additionally executable by the processor to perform operations including deriving a measure of variation between each one of the 3D poses of the plurality of keypoint detectors and computing a Euclidean norm of the measure of variation to produce an uncertainty value. The code is also executable by the processor to perform operations including controlling a process between the first object and the second object in response to the uncertainty value. The preceding subject matter of this paragraph characterizes example 12 of the present disclosure.

Computing the 3D pose is based on a 2D-to-3D correspondence model. The preceding subject matter of this paragraph characterizes example 13 of the present disclosure, wherein example 13 also includes the subject matter according to example 12, above.

The code is executable by the processor to individually train each one of the plurality of keypoint detectors prior to predicting the set of keypoints. Each one of the plurality of keypoint detectors has identical architecture, training duration, and training data. Each one of the plurality of keypoint detectors is initialized with random valued weights. The preceding subject matter of this paragraph characterizes example 14 of the present disclosure, wherein example 14 also includes the subject matter according to example 13, above.

The process between the first object and the second object includes a coupling process between the first object and the second object. Controlling the coupling process includes, when the uncertainty value is at or below a predefined threshold, engaging a coupling between the first object and the second object, when the uncertainty value is above the predefined threshold, preventing the coupling between the first object and the second object. The preceding subject matter of this paragraph characterizes example 15 of the present disclosure, wherein example 15 also includes the subject matter according to example 14, above.

Further disclosed herein is a vision-based tracking system. The vision-based tracking system includes a camera configured to generate a two-dimensional (2D) image of at least a portion of a first object, wherein the camera is located on a second object. The vision-based tracking system also includes a processor and non-transitory computer readable storage media storing code. The code is executable by the processor to perform operations including predicting a set of keypoints on the first object in the 2D image by each one of a plurality of keypoint detectors. The code is also executable by the processor to perform operations including computing a three-dimensional (3D) pose for each one of the plurality of keypoint detectors from the corresponding set of keypoints. The code is further executable by the processor to perform operations including deriving a measure of variation between each one of the 3D poses of the plurality of keypoint detectors and computing a Euclidean norm of the measure of variation to produce an uncertainty value. The code is additionally executable by the processor to perform operations including controlling a process between the first object and the second object in response to the uncertainty value. The preceding subject matter of this paragraph characterizes example 16 of the present disclosure.

Computing the 3D pose is based on a 2D-to-3D correspondence model. The preceding subject matter of this paragraph characterizes example 17 of the present disclosure, wherein example 17 also includes the subject matter according to example 16, above.

The code is executable by the processor to individually train each one of the plurality of keypoint detectors prior to predicting the set of keypoints. Each one of the plurality of keypoint detectors has identical architecture, training duration, and training data. Each one of the plurality of keypoint detectors is initialized with random valued weights. The preceding subject matter of this paragraph characterizes example 18 of the present disclosure, wherein example 18 also includes the subject matter according to any of examples 16-17, above.

The measure of variation between each one of the 3D poses of the plurality of keypoint detectors is the standard deviation between each one of the 3D poses. The preceding subject matter of this paragraph characterizes example 19 of the present disclosure, wherein example 19 also includes the subject matter according to example 18, above.

The process between the first object and the second object includes a coupling process between the first object and the second object. Controlling the coupling process includes, when the uncertainty value is at or below a predefined threshold, engaging a coupling between the first object and the second object, and, when the uncertainty value is above the predefined threshold, preventing the coupling between the first object and the second object. The preceding subject matter of this paragraph characterizes example 20 of the present disclosure, wherein example 20 also includes the subject matter according to any of examples 16-19, above.

The described features, structures, advantages, and/or characteristics of the subject matter of the present disclosure may be combined in any suitable manner in one or more examples. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example. In other instances, additional features and advantages may be recognized in certain examples that may not be present in all examples. Further, in some instances, well-known structures, materials, or operations are not shown or described in detail to avoid obscuring examples. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which:
Figure 1 is a schematic block diagram illustrating a vision-based tracking system, according to one or more examples of the present disclosure;
Figure 2 is a schematic, perspective view of a two-dimensional image of an aircraft involved in a vision-based tracking system, according to one or more examples of the present disclosure;
Figure 3 is a schematic block diagram of a method of estimating uncertainty in a vision-based tracking system, according to one or more examples of the present disclosure;
Figure 4 is a schematic, side view of a vision-based tracking system involving an aircraft refueling operation, according to one or more examples of the present disclosure;
Figure 5 is a schematic, perspective view of two-dimensional keypoints projected to three-dimensional space, according to one or more examples of the present disclosure; and
Figure 6 is a schematic flow diagram of a method of estimating uncertainty in a vision-based tracking system, according to one or more examples of the present disclosure.

### DETAILED DESCRIPTION

Reference throughout this specification to "one example," "an example", or similar language means that a particular feature, structure, or characteristic described in connection with the example is included in at least one example of the subject matter of the present disclosure. Appearances of the phrases "in one example", "in an example," and similar language throughout this specification may, but do not necessarily, all refer to the same example. Furthermore, the described features, advantages, and characteristics of the examples may be combined in any suitable manner. One skilled in the relevant art will recognize that the examples may be practiced without one or more of the specific features or advantages of a particular example. In other instances, additional features and advantages may be recognized in certain examples that may not be present in all examples.

These features and advantages of the examples will become more fully apparent from the following description and appended claims or may be learned by the practice of examples as set forth hereinafter. As will be appreciated by one skilled in the art, examples of the present disclosure may be embodied as a system, method, and/or computer program product. Accordingly, examples of the present disclosure may take the form of an entirely hardware example, an entirely software example (including firmware, resident software, micro-code, etc.) or an example combining software and hardware implementations that may all generally be referred to herein as a "circuit", "module", or "system." Furthermore, examples of the present disclosure may take the form of a computer program product embodied in one or more computer readable medium(s) having program code embodied thereon.

Disclosed herein are examples of methods, systems, and apparatuses of estimating uncertainty within a vision-based tracking system. The following provides some features of at least some examples of the uncertainty estimation methods, systems, and apparatus, and accompanying program products. In vision-based tracking systems, uncertainty estimation is used to evaluate the accuracy and trustworthiness of predicted keypoints within a two-dimensional (2D) to three-dimensional (3D) pose estimation pipeline. Converting a 2D image to a 3D pose estimation is prone to errors, influenced by factors like specific learning dynamics, unanticipated conditions, occlusions, environmental variables, or operator-related error. Given by way of a non-limiting example, in some examples, environmental variables may include occlusions, self-occlusions, variations in lighting, or external disruptions (e.g., adverse weather) captured in the 2D image, which can introduce inaccuracies into the pose estimations. In many cases, including vision-based tracking systems using neural networks, there is no reliable built-in mechanism to determine the accuracy of the system output (i.e., pose estimation). Accordingly, uncertainty estimation can be used to quantify the potential errors in a pose estimation. Uncertainty estimation can be used in systems that involve manual control, which allow a human operator to adjust their trust in the pose estimation. Moreover, uncertainty estimation can also be used for decision-making in automated systems that rely on pose estimation for tasks involving robotics or controllers. For example, whether using manual or automated systems, operations may be initiated or paused in situations where pose estimations exhibit higher or lower reliability, respectively.

Previous approaches of estimating uncertainty have focused on using sets of randomly-perturbed keypoints to construct a distribution of statistically plausible poses (i.e., Monte Carlo sampling). While this method captures uncertainty in keypoint-to-3D pose correspondence, it does not directly assess the accuracy of the underlying predicted 2D keypoints themselves. Accordingly, this approach falls short when dealing with inaccurately predicted keypoints, as it does not directly address the keypoints quality.

Therefore, the method described herein estimates uncertainty of the 3D pose and the underlying predicted 2D keypoints by leveraging a plurality of keypoint detector neural networks, form into an ensemble of neural networks. The ensemble of neural networks is utilized to obtain a plurality of 3D pose estimations, where each one of the neural networks predicts a set of keypoints in a 2D image and computes a corresponding 3D pose estimation from the set of keypoints. That is, given the predicted set of keypoints, the neural network employs a randomized algorithm that solves for the 3D pose by minimizing the keypoint reprojection error. However, the reprojection error cannot be used as an uncertainty measure, as it is a 2D space measurement, while the 3D pose exists in 3D space. Therefore, employing an ensemble of diverse keypoint detectors allows for the uncertainty associated with the multiple 3D pose estimations to be measured. This ensures a more comprehensive and accurate assessment of the reliability of the pose estimations. This method of estimating uncertainty can also be combined with other uncertainty measures, such as Monte Carlo sampling, to identity and mitigate potential errors in other examples of complex pose estimation scenarios.

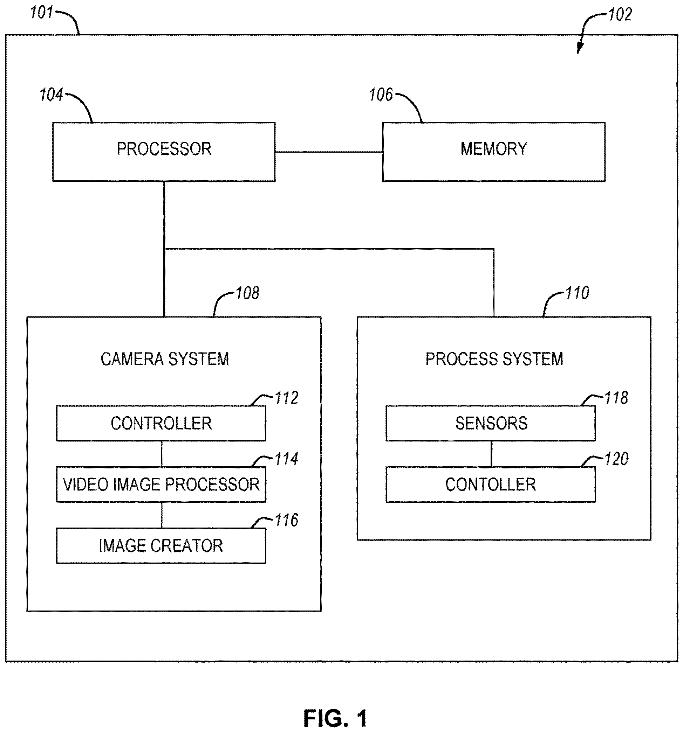

Referring to Figure 1 is a vision-based tracking system 102 located on a second object 101. As used herein, a vision-based tracking system is a system that employs visual information, typically captured through cameras or other imaging devices, to monitor and track objects or subjects within a given environment. The vision-based tracking system assesses the movement, position, and orientation of these objects in real-time. For example, vision-based tracking systems may be used within aviation, autonomous vehicles, medical imaging, industrial automation, etc. Vision-based tracking systems enable applications such as aerial refueling processes, object tracking, robot navigation, and more, where understanding the precise location and orientation of objects in a scene is crucial for real-world interactions and decision-making.

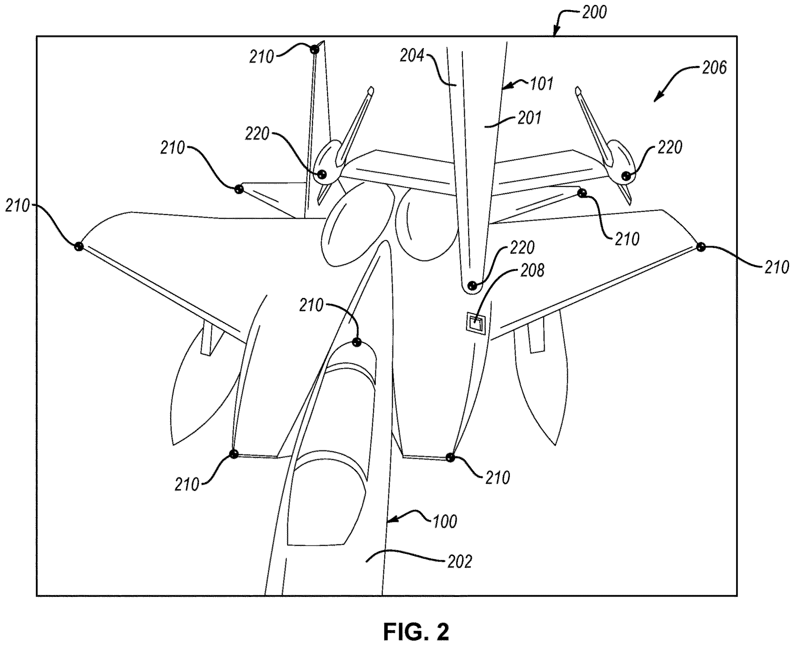

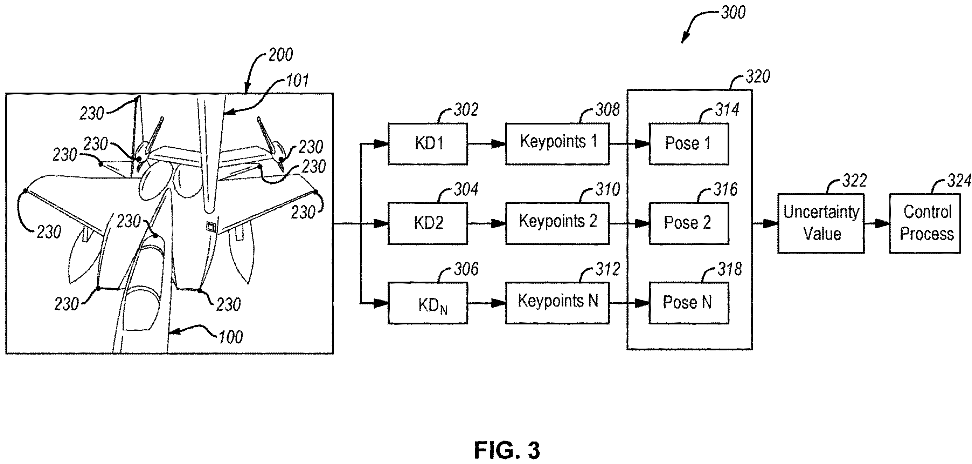

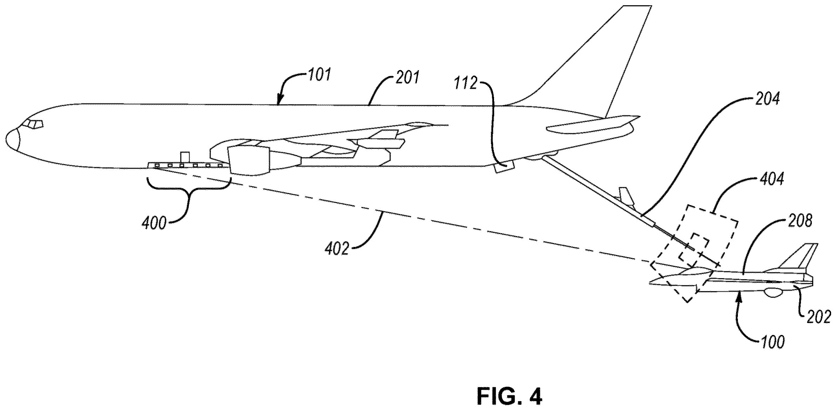

The second object 101 is configured to be positioned, relative to a first object, as described in reference to Figure 2, below. The vision-based tracking system 102 includes a processor 104, memory 106, a camera system 108, and a process system 110. In some examples, non-transitory computer readable instructions (i.e., code) stored in the memory 106 (i.e., storage media) cause the processor 104 to execute operations, such as the operations in the vision-based tracking apparatus (*see,* e.g., Figure 3). That is, code, stored in memory 106, is executable by the processor 104 to perform operations. The second object 101 may encompass any object equipped with the camera system 108 or may be the camera system 108 itself. In some examples, the second object 101 is a tanker aircraft, as shown in Figure 4. In such cases, the vision-based tracking system 102 is a refueling system that provides aerial refueling information, which can be supplied to receiver aircraft pilots, boom operators, and/or automated aerial refueling components during an aircraft approach to a refueling hookup position, relative to the tanker. In other examples, the second object 101 is a component within a factory automation process, used for determining whether parts or support tooling are correctly configured and oriented for subsequent manual or automatic robotic assembly. In yet other examples, the second object 101 may be any object employed in a vision-based tracking system where keypoints are predicted. Although an aerial refueling system is referenced throughout, it serves as just one example of the various applications of the vision-based tracking system 102 disclosed herein.

In various examples, the camera system 108 includes a camera 112, a video image processor 114, and an image creator 116. The camera 112 is any device capable of capturing images or video and includes a lens or lenses which, in some examples, may have remotely operated focus and zoom capabilities. The video image processor 114 is configured to process the images or video captured by the camera 112, and may adjust focus, zoom, and/or perform other operations to improve the image quality. The image creator 116 assembles the processed information from the video image processor 114 into a final image or representation which can be used for various purposes. The camera 112 is mounted to the second object 101, such that the camera 112 is fixed, relative to a first object. The camera 112 is fixed at a location where a field of view of the camera 112 includes at least a portion of the first object. In the example of the aerial refueling system, the camera 112 may be located aft and below the tanker aircraft to capture images of the area below and behind the tanker, such as being mounted to a fixed platform within a housing attached to the lower aft fuselage of the tanker aircraft.

In various examples, the process system 110 includes sensors 118 and a controller 120. The process system 110 is configured to control and/or guide a process between the second object 101 and the first object. The process may be a coupling process between the first object and the second object 101 where the first object and the second object 101 are at least temporarily coupled together (e.g., linked). In other examples, the process may be a non-coupling process between the first object and the second object 101. For example, the process may be an inspection or quality control process, assembly process without physical coupling of a first object and a second object 101, object recognition process, monitoring or tracking process, etc. Sensors 118 are configured to sense a position of the second object 101 and/or other components, such as the first object and rely the sensed data to the processor 104. The controller 120 is configured to control the process system 110 based on signals received from the processor 104, which may include the sensed data from the sensors 118. Moreover, the processor 104 generates instructions, such as prompts, alerts or warnings, based on an estimated uncertainty value generated by a plurality of keypoint detectors using data captured by the camera 112. The process of estimating the uncertainty value is described in more detail below in reference to Figure 3. Based on the instructions, the controller 120 informs, initiates or pauses the process of the process system 110.

Referring to Figure 2, the camera system 108 is configured to produce a two-dimensional (2D) image 200 of a three-dimensional (3D) space. The camera system 108 may produce the 2D image 200 from a single image captured by the camera 112 or extract the 2D image 200 from a video feed of the camera 112. The 2D image 200 may be provided as an RGB image, that is, an image represented in color using the red, green, and blue color channels. The 2D image 200 is configured to include at least a portion of a first object 100. In some examples, the 2D image 200 also includes at least a portion of the second object 101. As shown, the 3D space, represented in the 2D image 200, includes both a portion of the second object 101 and a portion of the first object 100. For example, as shown, the first object 100 is a receiver aircraft 202 which includes a boom nozzle receiver 208 (i.e., coupling location). The second object 101 is a tanker aircraft 201 having a deployed refueling boom 204 that is capable of coupling to the first object 100 at the boom nozzle receiver 208. Accordingly, during a coupling process, in order to accomplish fuel transfer from the tanker aircraft 201, the refueling boom 204 is coupled to the receiver aircraft 202.

Using a keypoint detector (i.e., a neural network), a set of keypoints 210, or locations of salient features on the second object 101, are predicted within the 2D image 200. As used herein a keypoint detector is a specific type of neural network that is configured to predict the location of keypoints on an object within a 2D image 200. Each keypoint of the set of keypoints 210 refers to a salient feature, such as a distinctive and relevant visual element or point of interest in the 2D image 200. For example, keypoints may refer to specific corners, edges, protrusions, or other unique features that help in identifying and tracking objects within an image. The keypoint detector may also be configured to predict a set of keypoints 220 on the first object 100, allowing for spatial relationship between the first object 100 and the second object 101 to be depicted by the set of keypoints 210 and set of keypoints 220, respectively. Accordingly, the set of keypoints may include a set of keypoints 210 on the first object 100 only, or a set of keypoints 210 on the first object 100 and a set of keypoints 220 on the second object 101.

The 2D image 200, captured during in real-time conditions, includes a background 206 and various environmental variables. The background 206 and environmental variables may include but not limited to occlusions, self-occlusions, lighting variations, or external disruptions (e.g., weather). The background 206 and/or environmental variables can pose challenges to predicting the set of keypoints 210 and the set of keypoints 220, as the visual elements in the first object 100 and/or second object 101 may be washed out, distorted, obscured, etc. Consequently, the set of keypoints 210 and/or 220 predicted by the keypoint detector may not be accurate due to the semantic factors, such as weather conditions or the presence of interfering objects, which may not be accounted for in the predicted keypoint locations.

Referring to Figure 3, a vision-based tracking apparatus 300 is shown. The vision-based tracking apparatus 300, through the processor 104, is configured to receive the 2D image 200 of at least a portion of the first object 100 via the camera 112 on the second object 101, predict sets of keypoints 308-312 on the first object 100 in the 2D image 200 by each one of a plurality of keypoint detectors 302-306, compute three-dimensional (3D) poses 314-318 each associated with a corresponding one of the plurality of keypoint detectors 302-306 from the a corresponding one of the set of keypoints 308-312, derive a measure of variation 320 between each one of the 3D poses 314-318 of the corresponding one of the plurality of keypoint detectors 302-306 and compute a Euclidean norm of the measure of variation 320 to produce an uncertainty value 322, and control a process 324 between the first object 100 and the second object 101 in response to the uncertainty value 322.

The vision-based tracking apparatus 300 may be part of a larger management system that may be located on the second object 101, on a remote-control system, and/or some combination of both. For example, in the case of an aerial refueling process, the vision-based tracking apparatus 300 may be part of a flight management system located on the tanker aircraft 201 and/or on a ground control system.

The vision-based tracking apparatus 300 is configured to receive the 2D image 200 from the camera 112, located on the second object 101. As described above, the 2D image 200 includes at least a portion of the first object 100 and may, in some examples, include at least a portion of the second object 101.

The vision-based tracking apparatus 300 includes a plurality of keypoint detectors, such as a first keypoint detector 302, a second keypoint detector 304, and a keypoint detector *N* 306. Although shown with three keypoint detectors 302-306, any number of keypoint detectors, up to *N* number of keypoint detectors, can be utilized, as desired. In some examples, the plurality of keypoint detectors may include more or less than the three keypoint detectors 302-306 shown. In other examples, the vision-based tracking apparatus 300 includes at least three keypoint detectors. The plurality of keypoint detectors are organized into an ensemble of keypoint detectors, meaning that the plurality of keypoint detectors 302-306 are configured to collectively make predictions of the visual data captured by the 2D image 200. An ensemble refers to a grouping of multiple keypoint detectors that collaborate to improve the accuracy and performance of keypoint predictions by comparing the results (e.g., uncertainty value) from the multiple keypoint detectors.

To prepare the plurality of keypoint detectors to predict keypoints, each one of the plurality of keypoint detectors 302-306 must undergo a training process. During training, each one of the plurality of keypoint detectors 302-306 operate independently and do not influence each other in any manner. Each one of the plurality of keypoint detectors 302-306 share an identical network architecture and loss function and are trained for the same training duration using the same training data. Moreover, each one of the plurality of keypoint detectors 302-306 is initialized with weights that are randomly assigned from identical distributions. That is, each one of the plurality of keypoint detectors 302-306 are diversified by training using random value weights. Notably, each one of the plurality of keypoint detectors 302-306 selects these random valued weights using a distinct random seed, ensuring that each keypoint detector starts with unique initial conditions, contributing to a diversity within the ensemble of keypoint detectors. After training each one of the plurality of keypoint detectors 302-306, the plurality of keypoint detectors 302-306 are organized into an ensemble. A key feature of the plurality of keypoint detectors 302-306 is their ability to produce consistent predictions in the final output (e.g., 3D pose) when the input data (e.g., 2D keypoints) falls within the expected scope, or is in-domain. Conversely, when the plurality of keypoint detectors 302-306 is beyond the expected range or particularly challenging (i.e., out-of-domain), the plurality of keypoint detectors 302-306 generate diverse predictions in the final output.

The plurality of keypoint detectors 302-306 are trained using training data. In some examples, the training data may include a plurality of training images or training video feed. The training data includes data that represents possible conditions under which a process between the first object and the second object may be performed. For example, the training data may include at least one of a training image comprising nominal conditions, a training image comprising at least one occlusion, a training image comprising at least one self-occlusion, a training image comprising brighter than nominal lighting, a training image comprising darker than nominal lighting, and/or a training image comprising a background blended with the first object.

Each one of the plurality of keypoint detectors 302-306 of the ensemble predicts a corresponding one of the set of keypoints 308-312 in the 2D image 200. In other words, *N* individual keypoint detectors are used to extract *N* independent set of keypoints predictions. For example, the first keypoint detector 302 predicts a first set of keypoints 308, the second keypoint detector 304 predicts a second set of keypoints 310, and keypoint detector *N* 306 predicts a set of keypoints *N* 312. The set of keypoints 308-312 are predictions of the position of ground truth keypoints 230 indicated on the 2D image 200, which include ground truth keypoints 230 on the first object 100. In some examples, the ground truth keypoints 230 include ground truth keypoints 230 on the first object 100 and the second object 101. It should be noted that the 2D image 200 does not include the ground truth keypoints 230, rather the ground truth keypoints 230 are shown on the 2D image solely for illustration purposes, indicating the keypoint locations each one of the plurality of keypoint detectors 302-306 is trained to predict. Each one of the plurality of keypoint detectors 302-306 computes a corresponding one of the 3D poses 314-318 from the corresponding one of the set of keypoints 308-312. For example, the first keypoint detector 302 computes a first 3D pose 314 from the set of keypoints 308, the second keypoint detector 304 computes a second 3D pose 316 from the set of keypoints 310, and the keypoint detector *N* 306 computes a 3D pose *N* 318 from the set of keypoints *N* 312.

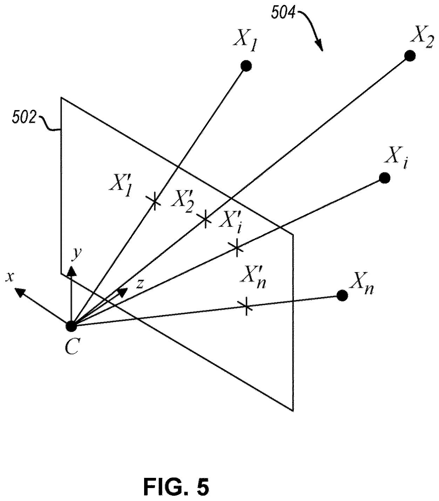

In some examples, the corresponding one of the 3D poses 314-318 is generated from the corresponding one of the set of keypoints 308-312 using a 2D-to-3D correspondence model. That is, the correspondence model establishes a correspondence between the 2D image 200 and the 3D real-world object. It enables the vision-based tracking apparatus 300 to determine how each one of the predicted set of keypoints 308-312 in the 2D image 200 relates to specific points or features on the 3D object. By establishing these correspondences, each one of the plurality of keypoint detectors 302-306 can estimate the object's 3D pose based on the predicted set of keypoints 308-312. As shown in Figure 5, a set of keypoints, represented by 2D keypoints X'₁, X' 2, X'ᵢ, X'ₙ, is referenced in 2D space 502, such as the 2D space in the 2D image 200. The corresponding keypoint detector then performs 2D-to-3D correspondence by projecting the set of keypoints into 3D space 504. That is, each one of the predicted set of keypoints are projected from 2D space 502 to 3D space 504 using a perspective-n-point (PnP) pose computation. Specifically, 2D keypoints X'₁, X'₂, X'ᵢ, X'ₙ are converted to 3D keypoints X₁, X₂, Xᵢ, and Xₙ, respectively.

Using an iterative optimization process, the PnP pose computation can be solved. The PnP pose computation serves as a mathematical framework used to calculate the corresponding one of the 3D poses 314-318 of the 2D image 200. Accordingly, this calculation ensures that the camera's view of the 3D object closely aligns with the predicted corresponding one of the set of keypoints 308-312 in the 2D image 200. In some examples, outlier 2D keypoints may be removed from the set of keypoints 308-312 before the corresponding one of the 3D poses 314-318 is generated. The outlier 2D keypoints can be manually removed from the set of keypoints 308-312. Conversely, a PnP solver may handle outliers by removing outliers from the set of keypoints 308-312, such as PnP RANSAC, may be utilized as the mathematical framework for calculating the corresponding one of the 3D poses 314-318. Algorithms utilizing PnP solver to remove outliers can be useful when the 2D image 200 has poor detection for at least a few 2D keypoints (i.e., poorly detected keypoints). The poorly detected keypoints may be automatically excluded from consideration, ensuring that they do not introduce bias into the predicted 3D pose.

Due to the iterative nature of the optimization process, there will always be a degree of error associated with the final output (i.e., 3D pose). This error, often quantified as the Euclidian distance (which may be measured in inches or, alternatively, cm), represents the difference between the predicted corresponding one of the 3D poses 314-318 and the true 3D pose. While this error is generally small, typically on the order of approximately one inch (2.5 cm), the error can become significantly larger when the predicted set of keypoints 302-306 are incorrect. In real-world scenarios, the vision-based tracking apparatus 300 lacks prior knowledge of this error during a process between the first object 100 and the second object 101. Accordingly, the vision-based tracking apparatus 300 relies on an uncertainty value 322, which serves as a quantifiable measure of the likelihood and extent of errors in the 3D poses 314-318. The uncertainty value 322 is computed by deriving a measure of variation 320 between each one of the 3D poses 314-318 of the plurality of keypoint detectors 302-306 and computing a Euclidean norm (i.e., 2-norm) of the measure of variation 320. The measure of variation 320 can be various measurements including standard deviation or variance. The measure of variation 320 is derived over the 3D poses 314-318 of the plurality of keypoint detectors 302-306. In some examples, each one of the 3D poses 314-318 has six degrees of freedom and therefore the 3D pose is a six-dimensional vector. That is, the 3D pose is a vector with six values, each one of the six values representing a corresponding one of the six degrees of freedom of the 3D pose. Accordingly, the uncertainty value 322, which is a single value, is the Euclidean norm of the six-dimensional measure of variation 320 over the multiple 3D poses 314-318. In other words, in some examples, the uncertainty value is derived by: U= Norm(STD([p₁,....p_{N}])), where U is the uncertainty value 322, norm is the Euclidean norm, STD is the standard deviation, p₁ is a first 3D pose, and p_{N} is a 3D pose *N.* Additionally, the measure of variation 320 can be computed independently for each dimension within the 3D poses 314-318. In other words, in some examples, it involved computing the measure of variation 320 separately for each of the six dimensions.

A process 324 is controlled between the first object 100 and the second object 101 in response to the uncertainty value 322. In some examples, when the uncertainty value 322 is at or below a predefined threshold value, the process can be initiated. In other words, the uncertainty value 322 represents the likelihood that the error does not exceed the predefined threshold value and therefore is safe to proceed with the process. Initiation of the process 324 may involve allowing for an automatic process to proceed or signaling to an operator that conditions are suitable for a manual process to proceed. Conversely, in some examples, when the uncertainty value 322 is above the predefined threshold value, the process 324 is prevented from commencing. In other words, the uncertainty value 322 represents the likelihood that the error exceeds the predefined threshold value and is not advisable to proceed with the process. This prevention may encompass preventing the process from initiating, or pausing or halting an ongoing process to avoid potential errors. In other examples, the uncertainty value 322 may be provided to an operator, and a decision of whether to proceed with the process 324 may be up to the judgement of the operator.

As shown in Figure 4, the process 324, in some examples, is a coupling process between a receiver aircraft 202 and a tanker aircraft 201 of an aerial refueling system. Although shown with aircraft, it should be appreciated that the coupling process or close quarter operations may occur between any first object 100 and second object 101. For example, refueling or close quarter operations between other vehicles, not just the aircraft 202 and 201 depicted. The vehicles may be any vehicles that move in a space (in water, on land, in air, or in space). The vehicles may also be manned or unmanned. In various examples, the vehicles may be a motor vehicle driven by wheels and/or tracks, such as, an automobile, a truck, a cargo van, and the like. The vehicles may also include a marine vessel such as a boat, a ship, a submarine, a submersible, an autonomous underwater vehicle (AUV), and the like. In yet other examples, the vehicles may include other manned or unmanned aircraft such as, a fixed wing aircraft, a rotary wing aircraft, and a lighter-than-air (LTA) craft.

In some examples, the tanker aircraft 201 includes an array of lights 400 located on the lower forward fuselage. The array of lights 400 is positioned to be clearly viewable by the pilot of the receiver aircraft 202, as shown by line 402. The array of lights 400 include various lights for providing directional information to the pilot of the receiver aircraft 202. That is, the array of lights 400 may be used to guide the pilot to position to receiver aircraft 202, relative to the tanker aircraft 201, such that a field of view 404 of the camera 112 is aligned for optimal vision-based tracking of the receiver aircraft 202. Accordingly, as shown, the field of view 404 of the camera 112 contains a view of a portion of the receiver aircraft 202, including the boom nozzle receiver 208 (i.e., coupling location) and a view of a portion of the deployed refueling boom 204 of the tanker aircraft 201.

Based on the uncertainty value, the refueling process between the receiver aircraft 202 and the tanker aircraft 201 can be initiated or halted. The refueling process can be automatically initiated or halted or an operator may manually control the process based on the uncertainty value.

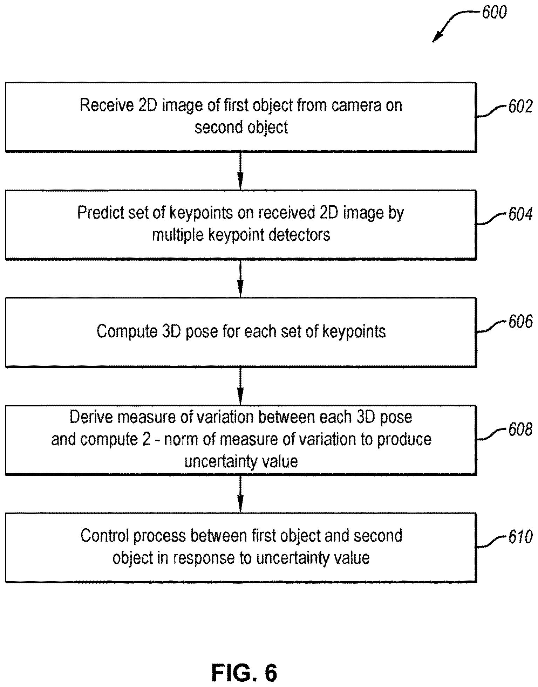

Referring to Figure 6, a method 600 of estimating uncertainty is a vision-based tracking system is shown. The method 600 includes (block 602) receiving a two-dimensional (2D) image 200 of at least a portion of a first object 100 via a camera on a second object 101. In some examples, the 2D image 200 also includes a least a portion of the second object 101. In the cases of a coupling process, the 2D image 200 typically includes a coupling location within the 2D image 200. As the 2D image 200 is taken in real-time, the 2D image 200 also includes background information and other semantic information.

The method 600 also includes (block 604) predicting a set of keypoints 308-312 on the first object 100 in the 2D image 200 by each one of a plurality of keypoint detectors 302-306. In some examples, the set of keypoints 308-312 also includes keypoints predicted on the second object 101. Prior to predicting keypoints, the plurality of keypoint detectors 302-306 are trained with identical training data to predict keypoints. The plurality of keypoint detectors 302-306 are diversified by initializing each one of the keypoint detectors with random valued weights via a different random seed.

The method 600 further includes (block 606) computing a corresponding one of a three-dimensional (3D) pose 314-318 for each one of the plurality of keypoint detectors 302-306 from the corresponding set of keypoints 308-312. In some examples, the corresponding one of the 3D poses 314-318 is generated from the corresponding set of keypoints 308-312 using a 2D-to-3D correspondence model. That is, the correspondence model enables the vision-based tracking system to determine how each of the predicted set of keypoints 308-312 in the 2D image 200 relates to specific points or features on the 3D object.

The method 600 additionally includes (block 608) deriving a measure of variation 320 between each one of the 3D poses 314-318 of the plurality of keypoint detectors 302-306 and computing a Euclidean norm of the measure of variation 320 to produce an uncertainty value 322. In some examples, the measure of variation 320 is the standard deviation, which is calculated over the 3D poses 314-318 of the plurality of keypoint detectors 302-306.

The method 600 also includes (block 610) controlling a process 324 between the first object 100 and the second object 101 in response to the uncertainty value 322. In some examples, when the uncertainty value 322 is at or below a predefined threshold value, the process can be initiated. Initiation of the process 324 may involve allowing for an automatic process to proceed or signaling to an operator that conditions are suitable for a manual process to proceed. Conversely, in some examples, when the uncertainty value 322 is above the predefined threshold value, the process 324 is prevented from commencing. This prevention may encompass preventing the process from initiating, or pausing or halting an ongoing process to avoid potential errors. In other examples, the uncertainty value 322 may be provided to an operator, and a decision of whether to proceed with the process 324 may be up to the judgement of the operator.

As referenced herein, the computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory ("RAM"), a read-only memory ("ROM"), an erasable programmable read-only memory ("EPROM" or Flash memory), a static random access memory ("SRAM"), a portable compact disc read-only memory ("CD-ROM"), a digital versatile disk ("DVD"), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture ("ISA") instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider). In some examples, electronic circuitry including, for example, programmable logic circuitry, field-programmable gate arrays ("FPGA"), or programmable logic arrays ("PLA") may execute the computer readable program instructions by utilizing state information of the computer readable program instructions to personalize the electronic circuitry.

Examples are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement features of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and computer program products according to various examples. In this regard, each block in the schematic flowchart diagrams and/or schematic block diagrams may represent a module, segment, or portion of code, which comprises one or more executable instructions of the program code for implementing the specified logical function(s).

It should also be noted that, in some alternative examples, the functions noted in the block may occur out of the order noted in the Figures. For example, two blocks shown in succession may, in fact, be executed concurrently or substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding examples. Indeed, some arrows or other connectors may be used to indicate only the logical flow of the depicted example. For instance, an arrow may indicate a waiting or monitoring period of unspecified duration between enumerated steps of the depicted example. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and program code.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof' includes only A, only B, only C, a combination of A and B, a combination of B and C, a combination of A and C or a combination of A, B and C.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

As used herein, the phrase "at least one of', when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its essential characteristics. The described examples are to be considered in all respects only as illustrative and not restrictive. All changes which come within the meaning of the examples herein are to be embraced within their scope.

## Claims

1. A method (600) of estimating uncertainty in a vision-based tracking system (102), the method (600) comprising:
receiving (602) a two-dimensional (2D) image (200) of at least a portion of a first object (100) via a camera (112) on a second object (101);
predicting (604) a set of keypoints (308-312) on the first object (100) in the 2D image (200) by each one of a plurality of keypoint detectors (302-306);
computing (606) a three-dimensional (3D) pose (314-318) for each one of the plurality of keypoint detectors (302-306) from a corresponding one of the set of keypoints (308-312);
deriving (608) a measure of variation (320) between each one of the 3D poses of the plurality of keypoint detectors (302-306) and computing a Euclidean norm of the measure of variation (320) to produce an uncertainty value (322); and
controlling (610) a process (110) between the first object (100) and the second object (101) in response to the uncertainty value (322).

2. The method (600) of claim 1, wherein computing the 3D pose (314-318) is based on a 2D-to-3D correspondence model.

3. The method (600) of claim 1 or 2, wherein:
each 3D pose (314-318) comprises a vector of six values;
each one of the six values represents a corresponding one of six degrees of freedom of the 3D pose; and
deriving the measure of variation (320) between each one of the 3D poses (314-318) comprises deriving the measure of variation (320) in each vector for each one of the six degrees of freedom.

4. The method (600) of any preceding claim, wherein the plurality of keypoint detectors (302-306) comprises at least three keypoint detectors.

5. The method (600) of any preceding claim, further comprising individually training each one of the plurality of keypoint detectors (302-306) prior to predicting the corresponding set of keypoints (308-312), wherein:
each one of the plurality of keypoint detectors (302-306) has identical architecture, training duration, and training data; and
each one of the plurality of keypoint detectors (302-306) is initialized with random valued weights.

6. The method (600) of claim 5, wherein the measure of variation (320) between each one of the 3D poses (314-318) of the plurality of keypoint detectors (302-306) is a standard deviation between each one of the 3D poses (314-318).

7. The method (600) of any preceding claim, wherein:
the process (110) between the first object (100) and the second object (101) comprises a coupling process between the first object (100) and the second object (101); and
controlling the coupling process comprises:
when the uncertainty value (322) is at or below a predefined threshold,
engaging a coupling between the first object (100) and the second object (101); and when the uncertainty value is above the predefined threshold, preventing the coupling between the first object (100) and the second object (101).

8. The method (600) of any preceding claim, wherein:
the process (110) between the first object (100) and the second object (101) is automatically controlled; or
the process (110) between the first object (100) and the second object (101) is manually controlled, such that the process (110) is initiated by an operator.

9. The method (600) of any preceding claim, wherein:
the 2D image (200) further comprises a portion of the second object (101); and
predicting the set of keypoints (308-312) further comprises predicting additional keypoints (220) on the second object (101) in the 2D image (200) by each one of the plurality of keypoint detectors (308-312).

10. The method (600) of any preceding claim, wherein:
the first object (101) is a receiver aircraft (202);
the second object (100) is a tanker aircraft (201); and
the process (110) is a refueling operation between the receiver aircraft (202) and the tanker aircraft (201).

11. A computer program comprising computer program instructions that, when executed by one or more computer processors, cause the one or more computer processors to perform the method of any preceding claim.

12. A computer readable medium having stored thereon the computer program of claim 11.

13. A vision-based tracking apparatus (300) comprising:
one or more computer processors (104); and
one or more non-transitory computer readable storage media storing code, the code being executable by the one or more processor to perform the method of any of claims 1 to 10.

14. The vision-based tracking apparatus (300) of claim 13, further comprising:
a camera (112) configured to generate the a two-dimensional (2D) image (200) of the at least a portion of a first object (100), wherein the camera (112) is located on the second object (101).

15. A tanker aircraft (201) comprising the vision-based tracking system (102) of claim 13 or 14.
